# EUROPÄISCHE PATENTSCHRIFT

(11) **EP 3 405 445 B1**
(45) Veröffentlichungstag und Bekanntmachung des Hinweises auf die Patenterteilung: **31.07.2019**
(21) Anmeldenummer: 17822547.0
(22) Anmeldetag: 27.11.2017
(51) Int. Cl.: C03C 21/00, C03C 23/00

(54) **VERFAHREN ZUR HERSTELLUNG EINER BIOZID WIRKENDEN GLASOBERFLÄCHE EINES KALK-NATRONSILICATGLASES**
METHOD FOR PRODUCING A BIOCIDAL GLASS SURFACE OF A SODA-LIME GLASS
PROCÉDÉ POUR LA FABRICATION D'UNE SURFACE DE VERRE À EFFET BIOCIDE D'UN VERRE EN SILICATE DE CALCIUM-SODIUM

(30) Priorität: 23.12.2016 DE 102016125544
(43) Veröffentlichungstag der Anmeldung: 28.11.2018
(73) Patentinhaber: Glaswerke Arnold GmbH & Co. KG, 73630 Remshalden (DE); Hegla Boraident GmbH & Co. KG, 06118 Halle/Saale (DE)
(72) Erfinder: ARNOLD, Hans-Joachim, 73630 Remshalden (DE); DEHNER, Hermann, 91564 Neuendettelsau (DE); RAINER, Thomas, 38855 Wernigerode (DE)
(74) Vertreter: Geitz Truckenmüller Lucht Christ
(86) Internationale Anmeldenummer: PCT/DE2017/101027
(87) Internationale Veröffentlichungsnummer: WO 2018/113823

(56) Entgegenhaltungen:
- EP-A1- 1 270 527
- EP-A1- 1 449 816
- EP-A2- 2 165 987
- WO-A1-2015/036426
- WO-A2-02/085807
- DE-A1-102004 011 316

## Beschreibung

Die Herstellung von bioziden Oberflächen, insbesondere von antibakteriellen Oberflächen, gewinnt immer mehr an Bedeutung. Ein bewährter Ansatz ist es, an Oberflächen anhaftende Mikroorganismen mit starken chemischen Reinigern abzutöten. Dies ist für Mensch und Umwelt nicht gerade förderlich. Bei einer Behandlung der Keime mit Antibiotika können wiederum im Laufe der Zeit Resistenzen entstehen. Somit wäre es von Vorteil, das Anhaften bzw. das Vermehren von Bakterien an Oberflächen von vornherein zu unterbinden. Dabei haben sich Beschichtungen von Vorteil erwiesen, die Metallnanopartikel enthalten, beispielsweise aus Kupfer (Cu), Blei (Pb), Quecksilber (Hg) oder Silber (Ag). Ein geringer Prozentsatz dieser Partikel liegt als Ion vor und inaktiviert nach dem Eindringen in das Bakterium unter anderem Proteine, so dass dieser Keim abstirbt. Silberionen haben sich hierbei als besonders effektiv und trotzdem umweltverträglich herausgestellt. Silberionen können als Bakterizid insbesondere gegen schwarzen Gießkannenschimmel (Aspergillus niger), Pseudomonas aeruginosa und Staphylococcus aureus eingesetzt werden.

Allgemein versteht man unter Bioziden Chemikalien oder Mikroorganismen, die im nicht-agrarischen Bereich zur Schädlingsbekämpfung (beispielsweise gegen Ratten, Insekten, Pilze, Mikroben) eingesetzt sind. Biozide schützen die Gesundheit und Produkte des Menschen. Biozid-Produkte unterliegen in der Europäischen Union der Verordnung (EU) Nr. 528/2012. Diese definiert in Artikel 3 Absatz 1 a) Biozidprodukte als
- jeglichen Stoff oder jegliches Gemisch in der Form, in der er/es zum Verwender gelangt, und der/das aus einem oder mehreren Wirkstoffen besteht, diese enthält oder erzeugt, der/das dazu bestimmt ist, auf andere Art als durch bloße physikalische oder mechanische Einwirkung Schadorganismen zu zerstören, abzuschrecken, unschädlich zu machen, ihre Wirkung zu verhindern oder sie in anderer Weise zu bekämpfen
   und
- jeglichen Stoff oder jegliches Gemisch, der/das aus Stoffen oder Gemischen erzeugt wird, die selbst nicht unter den ersten Gedankenstrich fallen und der/das dazu bestimmt ist, auf andere Art als durch bloße physikalische oder mechanische Einwirkung Schadorganismen zu zerstören, abzuschrecken, unschädlich zu machen, ihre Wirkung zu verhindern oder sie in anderer Weise zu bekämpfen."

Bakterizide sind chemische Substanzen, die Bakterien abtöten. Bakterizide gehören zur der Stoffgruppe der Mikrobiozide. Das Adjektiv "bakterizid" beschreibt die abtötende Wirkung einer Substanz auf Bakterien.

Zum Zwecke einer chemischen Härtung und/oder Färbung von Glas sind Verfahren allgemein bekannt geworden, bei denen ein lonenaustausch von Alkaliionen in der Glasoberfläche durchgeführt wird.

Diesbezüglich kann auch auf die DE 38 40 071 A1 hingewiesen werden, in der einige bekannte Verfahren nach dem Stand der Technik beschrieben sind:
- Ersetzen von kleineren Alkaliionen durch größere Alkaliionen, wodurch in der Glasoberfläche eine Druckspannung entsteht, durch welche die Festigkeit des Glases wesentlich verbessert werden kann.
- lonenaustausch von Alkaliionen durch Silberionen und/oder durch Kupferionen, um eine Färbung in der Glasoberfläche zu erzeugen. Beispielsweise zur Erzeugung von Skalen auf Glasgeräten, wobei die Skala in Form einer AgCl-haltigen Paste auf das Glas aufgebracht wird.
- lonenaustausch mittels eines geschmolzenen Salzes (Salzbad) bei vergleichsweise niedrigen Temperaturen von bis zu etwa 450°C, beispielsweise Schmelzen von Alkalinitraten oder Alkalinitriten, oder bei höheren Temperaturen, beispielsweise Schmelzen von Chloriden und/oder Sulfaten.

Salz-Schmelzen können die Oberfläche sowohl der zu behandelnden Gläser als auch des Schmelze-Behälters und sonstiger Einrichtungen angreifen. Der Umgang mit geschmolzenen Salzen ist nicht ungefährlich und erfordert aufgrund der Toxizität und der Explosionsgefahr besondere Sicherheitsvorkehrungen, was einen großtechnischen Einsatz sehr behindert. Die Salzbäder altern durch die aufgenommenen lonenaustauschprodukte, die sich in dem Salzbad anreichern, wodurch der Ionenaustausch behindert bzw. abgeschwächt wird. Die Salzbäder müssen also regelmäßig erneuert werden. Außerdem erfordert die Entsorgung der verbrauchten Salzbäder einen hohen Aufwand. Aufgrund der Alterung der Salzbäder ändern sich über der Zeit die lonen-Austauschbedingungen, so dass die Verfahrensparameter laufend angepasst werden müssen, um ein Verfahrensprodukt mit gleichbleibenden Eigenschaften zu erzielen.

Zur Beseitigung der prinzipiellen Nachteile der Salzschmelzen, zur Gewährleistung von konstanten Verhältnissen beim lonenaustausch, zur Verhinderung eines Angriffes bzw. einer Beschädigung der zu behandelnden Glasoberfläche oder von apparativen Einrichtungen unabhängig von dem zum lonenaustausch verwendeten Austauschmedium und zum Zwecke einer leichten Entfernbarkeit des Austauschmediums von der Glasoberfläche, wurde gemäß der DE 38 40 071 A1 ein Verfahren zum Ionenaustausch an Glas oder Glaskeramik mittels einer Salzschicht mit austauschbaren Kationen bei erhöhter Temperatur vorgeschlagen. Bei diesem Verfahren wird auf das Glas oder auf die Glaskeramik eine bei der Ionenaustauschtemperatur feste, nicht schmelzende und sich zersetzende Schicht von Salzpartikeln mit einer Partikelgröße von weniger als 250 µm aufgebracht und anschließend das Glas oder die Glaskeramik auf die Ionenaustauschtemperatur gebracht. Der lonenaustausch erfolgt in einer Festkörperreaktion. Der lonenaustausch kann durch ein elektrisches Feld unterstützt werden. Bevorzugt werden Salze der Alkalimetalle, des Silbers, Zinks und Cadmiums eingesetzt. Die Salze kommen insbesondere als Sulfate, Chloride, Pyrosulfate, Carbonate, Nitrate, Phosphate, Nitrite und Oxide zur Anwendung. Zum Aufbringen der Salzschicht auf die Glasoberfläche können die folgenden Verfahren verwendet werden: Aufbringen von feingepulvertem Salz mittels elektrostatischer Kräfte; Aufspritzen einer Dispersion oder Suspension des Salzes; Tauchen der Glasoberfläche in die Dispersion oder Suspension oder Beschichten mittels Siebdruck oder Abziehbildtechnik. Insbesondere die letzteren Techniken sind geeignet, nur ausgewählte Teilbereiche der Glasoberfläche zu beschichten. Nach dem Aufbringen der Salzschicht und einem gegebenenfalls erfolgten Trocknen wird das Glas bzw. die Glaskeramik in einem Ofen auf die Ionenaustauschtemperatur gebracht. Diese Temperatur liegt je nach Glas- bzw. Glaskeramiksorte und in Abhängigkeit davon, ob oberhalb oder unterhalb der Glastransformationstemperatur T_{g} des Glases gearbeitet werden soll, zwischen 400°C und etwa 1000°C. Nach erfolgtem lonenaustausch wird die aufgetragene Schicht wieder entfernt, beispielsweise durch einfaches Abbürsten oder durch Auflösen in Wasser.

Bei diesem Verfahren wird, ähnlich wie bei den Salzschmelzen, der gesamte GlasKörper bzw. der gesamte Glaskeramik-Körper auf die Ionenaustauschtemperatur gebracht. Dies geschieht bei diesem Verfahren in einem Ofen, während bei den Tauchverfahren unter Verwendung von Salzschmelzen ein beheizter Behälter verwendet wird. Dadurch kann es zu unerwünschten Veränderungen der Struktur und/oder der physikalischen Eigenschaften des behandelten Glas- bzw. Glaskeramik-Körpers kommen. Eine Begrenzung des lonenaustauschs auf bestimmte Teilflächen des zu behandelnden Glas- bzw. Glaskeramik-Körpers ist nicht oder nur aufwendig möglich. Diese Verfahren sind vergleichsweise unflexibel und ihr Anwendungsbereich ist vergleichsweise beschränkt.

Aus der DE-A-28 45 113 ist ein Verfahren zu Herstellung silberhaltiger Hydratgläser mit thermoplastischen und photosensitiven Eigenschaften bekannt geworden. Danach können in ein zur Hydratation geeignetes Glas nach der Hydratation oder gleichzeitig mit dieser Silberionen (Ag⁺) eingebaut werden, welche dem Glas photosensitive Eigenschaften verleihen. Bei diesem Verfahren geht es um eine Herstellung von Glaskörpern mit thermoplastischen Eigenschaften, die zumindest in einem Oberflächenteil Ag⁺-Ionen enthalten, und im Wesentlichen, in Mol.-% auf Oxidbasis 3 - 25 % Na₂O und/oder K₂O und 50 - 95 % SiO₂ enthalten, wobei die Summe dieser Bestandteile wenigstens 55 % der Gesamtzusammensetzung beträgt. Gemäß einer ersten Alternative werden die Glaskörper mit einer Dicke nicht über 5 mm bei einer Temperatur über 100°C und einem Druck über 20 psig einer Ag⁺-Ionen enthaltenden wässerigen Lösung mit einem pH unter 4 mindestens solange in Kontakt gebracht, bis wenigstens ein Oberflächenteil in einem thermoplastische Eigenschaften erzeugenden Ausmaße hydratisiert und Na⁺-Ionen und/oder K⁺-Ionen durch Ag⁺-Ionen ersetzt werden, wobei der Anteil der Na⁺-Ionen und/oder K⁺-Ionen des hydratisierten Glases mit zunehmenden Ag⁺-Ionen abnimmt. Gemäß einer zweiten Alternative wird der Glaskörper bei einer Temperatur von wenigstens 100 °C einer H₂O enthaltenden Gasatmosphäre wenigstens 75 % relativer Feuchtigkeit für eine zur Entwicklung wenigstens eines im Wesentlichen mit Wasser gesättigten Oberflächenteils ausreichende Zeitdauer ausgesetzt, anschließend durch Kontakt mit einer Gasatmosphäre einer wenigster als 90 % der relativen Feuchtigkeit der ersten Gasatmosphäre betragenden Feuchtigkeit dehydratisiert, bis der Wassergehalt wenigstens eines Oberflächenteils herabgesetzt aber immer noch hoch genug für die Einstellung thermoplastischer Eigenschaften ist, und schließlich wird der Glaskörper bei einer Temperatur über 100 °C einer Ag+ Ionen enthaltenden wässerigen Lösung mit einem pH unter 5 mindestens solange in Kontakt gebracht, bis Na⁺-Ionen und/oder K⁺-Ionen durch Ag⁺-Ionen ersetzt sind, wobei der Anteil der Na⁺-Ionen und/oder K⁺-Ionen des hydratisieren Glases mit zunehmenden Ag⁺-Ionen abnimmt. Die durch ultraviolette Bestrahlung gedunkelten, in Silbersalzlösungen hydratisierten Gläser mit ausgetauschten Silber-Ionen (Ag⁺-Ionen) können mit polarisierten oder unpolarisierten Laserstrahlen eines Lasers optisch gebleicht werden. Beispielsweise werden dünne Glasbänder in Ag-NO₃-Lösungen verschiedener Silbersalzkonzentration eingetaucht und während 8 Stunden im Autoklav auf 270 °C erhitzt. Diese Verfahren sind aufwändig und weisen ähnliche Nachteile auf, wie die bereits vorstehend beschriebenen Verfahren.

Ferner ist allgemein bekannt geworden, eine Glasoberfläche mit antibakteriell wirkenden Silberionen auszustatten, indem Silbernanopartikel auf die Glasoberfläche aufgebracht und mit einem Lack fixiert werden. Die Silbernanopartikel geben Silber-ionen ab, die durch die Matrix an die Glasoberfläche diffundieren. Hier können sie mit den dort anhaftenden Mikroorganismen in Wechselwirkung treten. Ein Nachteil dieses Verfahrens besteht in der Abnutzung der Lackschicht, so dass nach einer gewissen Zeit die keimtötende Wirkung nachlässt.

Aus der DE 10 2004 011 316 A1 ist ein Verfahren zur Strukturierung einer Glasoberfläche in hydrophile Bereiche und hydrophobe Bereiche und eine Druckform bekannt geworden, die mit einem derartigen Verfahren strukturierbar ist. Diese Druckschrift offenbart ein Verfahren mit Merkmalen des Oberbegriffs des Anspruches 1, ohne dass die Herstellung oder Ausbildung einer biozid wirkenden Glasoberfläche eines Kalk-Natronsilicatglases offenbart wäre. Bei diesem Verfahren muss die Glasoberfläche vorbeschichtet werden und es ist eine aufwändige Nachreinigung erforderlich. Außerdem ist bei diesem Verfahren der Verbrauch an Silber vergleichsweise groß.

Aus der WO 2015/036426 A1 ist ein Laserverfahren zum Einbringen von metallischen Nanopartikeln in die Oberfläche von Glassubstraten bekannt geworden. Dabei wird eine Silber enthaltende Schicht unmittelbar auf die Glasoberfläche aufgebracht. Das Silber wird nach der Laserbehandlung im Glas zu Atomen reduziert, die dann Nanopartikel im Glas ausbilden.

Es ist eine Aufgabe der Erfindung, ein Verfahren zur Herstellung einer biozid insbesondere bakterizid, also antibakteriell wirkenden Glasoberfläche eines Kalk-Natronsilicatglases zur Verfügung zu stellen, mit dem die Nachteile der aus dem Stand der Technik bekannten Verfahren vermieden werden und mit dem erweitere bzw. ganz neue Anwendungen möglich sind.

Diese Aufgabe wird erfindungsgemäß durch ein Verfahren zur Herstellung einer biozid, insbesondere bakterizid, wirkenden Glasoberfläche eines Kalk-Natronsilicatglases gelöst, bei dem eine Glasoberfläche eines Kalk-Natronsilicatglases mit Silber oder Silbersalz oder Silber-Ionen (Ag⁺-Ionen) unmittelbar oder mittelbar in Berührung gebracht wird und direkt oder indirekt mittels wenigstens eines Laserstrahls wenigstens eines, vorzugsweise gepulsten, Lasers, vorzugsweise lokal, insbesondere punktförmig oder linienförmig, vorzugsweise punktuell, derart erhitzt wird, dass es zu einem lonenaustausch von Natrium-Ionen (Na⁺-Ionen) aus dem Kalk-Natronsilicatglas mit Silber-Ionen (Ag⁺-Ionen) der Silber-Ionen oder mit Silber-Ionen (Ag⁺-Ionen) aus dem Silber oder aus dem Silbersalz und zur Einlagerung von Silber-Ionen der Silber-Ionen im Bereich der Glasoberfläche kommt, wobei die Glasoberfläche, bevor sie mittels des wenigstens einen Laserstrahls des Lasers erhitzt wird, mit einem eine Trägerschicht, eine darauf angeordnete oder applizierte Schicht aus Silber und eine darauf angeordnete oder applizierte, die Schicht aus Silber abdeckende Lack-Schutzschicht aufweisenden Transferträger derart belegt wird, dass die Lack-Schutzschicht die Glasoberfläche unmittelbar berührt, wobei daran anschließend die Glasoberfläche mittels des wenigstens einen Laserstrahls des Lasers, insbesondere eines Festkörperlasers bzw. eines Faserlasers, vorzugsweise eines Nd:YAG-Faserlasers, erhitzt wird. Dies also derart, dass es zu dem lonenaustausch von Natrium-Ionen (Na⁺-Ionen) aus dem Kalk-Natronsilicatglas mit Silber-Ionen (Ag⁺-Ionen) der Silber-Ionen oder mit Silber-Ionen (Ag⁺-Ionen) aus dem Silber oder aus dem Silbersalz und zu der Einlagerung von Silber-Ionen der Silber-Ionen im Bereich der Glasoberfläche kommt. Dieses Verfahren zeichnet sich durch eine besonders große Wirtschaftlichkeit bei der Herstellung von bioziden Glasoberflächen aus. Gegenüber dem Verfahren der Vorbeschichtung von Glas mit Silbersalzlösung und anschließender Trocknung nach dem Stand der Technik weist das erfindungsgemäße Verfahren einige weitere Vorteile auf:
- geringerer Materialverbrauch an Silber;
- keine Vorbeschichtung erforderlich;
- keine aufwendige Nachreinigung erforderlich.

Gemäß einer besonders vorteilhaften Ausführungsvariante kann vorgesehen sein, dass der Transferträger eine von der Schutzschicht, vorzugsweise in eine entgegengesetzte Richtung, weg weisende Trägerseite (Rückseite) aufweist, und dass der wenigstens eine Laserstrahl in Richtung sowie unmittelbar oder mittelbar auf die von der Schutzschicht weg weisende Trägerseite des Transferträgers strahlt, wodurch die Glasoberfläche erhitzt wird oder so dass die Glasoberfläche mittels des wenigtens einen Laserstrahls indirekt erhitzt wird.

Bei dem erfindungsgemäßen Verfahren wird die Energie des wenigstens einen Laserstahls des Lasers von der Schicht aus Silber oder von einer die Schicht aus Silber enthaltenden Beschichtung eines Transfermaterials des Transferträgers nahezu vollständig absorbiert. Dadurch wird das Silber bzw. die Beschichtung von dem Trägermaterial des Transferträgers gelöst und unter Einwirkung von Energie (Wärme) auf die Glasoberfläche des Kalk-Natronsilicatglases transferiert. Dabei wird die Glasoberfläche mittels des Laserstrahls des Lasers entweder im Wesentlichen indirekt erhitzt oder ausschließlich indirekt erhitzt.

Bei dem erfindungsgemäßen Verfahren wird das zu behandelnde Glas weder beschädigt noch weist das behandelte Glas eine verfahrensbedingte Verfärbung auf. Mittels des erfindungsgemäßen Verfahrens sind biozide, insbesondere bakterizide, Glasoberflächen von Kalk-Natronsilicat-Gläsern herstellbar, die vielfältig einsetzbar sind, beispielsweise im Gesundheitsbereich, insbesondere in Krankenhäusern und Arztpraxen, im Lebensmittelbereich, im Haushaltsbereich, insbesondere in Küchen, im Sanitärbereich, im Baubereich, insbesondere bei Architekturglas und in verfahrenstechnischen Einrichtungen und Apparaten. Besonders bevorzugte Anwendungen betreffen Glastüren, Gläser für Krankenhäuser und Bildschirm-Tastfelder bzw. Berührfelder ("Touchpanels") sowie berührungsempfindliche Bildschirme ("Touchscreens"). Mit dem erfindungsgemäßen Verfahren können Kalk-Natronsilicat-Gläser nicht nur kleinflächig sondern auch großflächig mit bioziden Oberflächen versehen werden. Gegenüber den aus dem Stand der Technik bekannten Verfahren weist das erfindungsgemäße Verfahren insbesondere die folgenden Vorteile auf: Es ist kostengünstiger und energieeffizienter, der Materialeinsatz von Silber ist geringer und es ist erstmals eine Strukturierung der Glasoberfläche, auch nur von Teiloberflächen der Glasoberfläche eines Glases möglich. So kann beispielsweise bei einer Glastür nur in einem Glasoberflächenbereich rund um einen Türgriff der Glastür eine biozide Wirkung und zugleich eine Oberflächenstrukturierung erzeugt werden. Mittels des erfindungsgemäßen Verfahrens können Glasoberflächen mit einer bioziden Wirkung und zugleich mit Glasoberflächenstrukturen, insbesondere mit Präzisionsstrukturen im Mikrometerbereich bzw. in µm-Dimensionen, erzeugt werden.

Basis-Glaserzeugnisse aus Kalk-Natronsilicatglas sind in der DIN EN 572-1 (Juni 2016) festgelegt und klassifiziert. Diese Europäische Norm gibt auch die chemische Zusammensetzung und die wichtigsten physikalischen und mechanischen Eigenschaften dieser Basis-Erzeugnisse an und definiert ihre allgemeinen Qualitätskriterien.

Bevorzugt kann es sich bei dem Laser um einen im Infrarot-Wellenlängenbereich emittierenden Laser handeln.

Gemäß einer vorteilhaften Weiterbildung kann es sich bei dem Laser um einen CO₂-Laser oder um einen Nd:YAG-Laser handeln.

Gemäß einer vorteilhaften Ausgestaltung kann es sich bei dem Silbersalz um Silbernitrat oder Silberchlorid und/oder bei den Anionen um Nitrat-Ionen oder Chlor-Ionen handeln.

Gemäß einer bevorzugten Ausführungsvariante kann die Schicht aus Silber aus atomarem Silber bestehen. Die Schicht aus Silber kann aus Silbernanopartikeln (Nanosilber) bestehen. Das Trägermaterial des Transferträgers kann zur Ausbildung der besagten Schicht mit Silber, insbesondere mit Silbernanopartikeln, beschichtet, vorzugsweise besputtert, sein.

Gemäß einer Ausgestaltung kann vorgesehen sein, dass die Trägerschicht aus Kunststoff besteht oder mit Kunststoff gebildet ist.

Bei der Trägerschicht kann es sich um eine Folie und/oder um ein Band handeln.

In bevorzugter Ausgestaltung kann vorgesehen sein, dass zwischen der Trägerschicht und der Schicht aus Silber eine, vorzugsweise unmittelbar auf der Trägerschicht angeordnete oder applizierte, Haftvermittlerschicht zur Vermittlung einer Haftung des Silbers an der Trägerschicht angeordnet oder appliziert ist.

Gemäß einer bevorzugten Weiterbildung kann vorgesehen sein, dass es sich bei dem Laser um einen im Infrarot-Wellenlängenbereich emittierenden Laser handelt. Bei dem Laser kann es sich um einen gepulsten Laser handeln bzw. um einen Laser, der im so genannten pw-Betrieb (Puls-Betrieb) bzw. im PWM-Betrieb (Pulsweitenmodulations-Betrieb) betreibbar ist oder betrieben wird. Im PWM-Betrieb wird der Laser für eine Impulsdauer τ von einigen µs angeschaltet. Danach erfolgt eine Abschaltphase, die sich aus der Differenz der Periodendauer T in µs und der Impulsdauer τ ergibt.

Gemäß einer Ausführungsvariante kann es sich bei dem Laser um einen Gaslaser, vorzugsweise um einen, insbesondere bei einer Haupt-Wellenlänge von 10,6 µm emittierenden, CO₂-Laser oder um einen Festkörperlaser, vorzugsweise um einen, insbesondere bei einer Haupt-Wellenlänge von 1064 nm emittierenden, Nd:YAG-Laser (Neodym:Yttrium-Aluminium-Granat-Laser) handeln. Die Verwendung eines Nd:YAG-Lasers bietet gegenüber der Verwendung eines CO₂-Lasers den Vorteil, dass die sichtbaren Prozessschwankungen wesentlich geringer ausfallen. Außerdem sind dann weniger Prozessschritte erforderlich, die außerdem schneller abgearbeitet werden können.

Gemäß einer vorteilhaften Weiterbildung kann vorgesehen sein, dass die Glasoberfläche mittels des Laserstrahls des Lasers an einzelnen, vorzugsweise punktförmigen, Stellen bzw. Punkten zeitlich nacheinander derart erhitzt wird, dass sich die einzelnen Stellen bzw. Punkte überlappen oder nicht überlappen.

Gemäß einer Ausführungsvariante kann vorgesehen sein, dass der lonenaustausch durch ein elektrisches Feld unterstützt wird.

Gemäß einem bevorzugten Ausführungsbeispiel kann vorgesehen sein, dass es sich bei dem Silbersalz um Silbernitrat (AgNO₃) oder Silberchlorid (AgCl) handelt und/oder dass es sich bei den Anionen um Nitrat-Ionen (NO₃⁻) oder Chlor-Ionen (Cl⁻) handelt.

Gemäß einer besonders bevorzugten Ausgestaltung kann vorgesehen sein, dass es sich bei dem Kalk-Natronsilicatglas um Float-(Flach-)Glas handelt, das eine Badseite und eine Luftseite aufweist.

Bei "Floatglas" handelt es sich gemäß der bereits erwähnten DIN EN 572-1, Ziffer 3.1 um ein planes, durchsichtiges, klares oder gefärbtes Kalk-Natronsilicatglas mit parallelen und polierten Oberflächen, hergestellt durch kontinuierliches Aufgießen und Fließen über ein Metallbad. In der in dieser Europäischen Norm zitierten DIN EN 572-2 sind Anforderungen an Maße und Mindestqualität (in Bezug auf optische und sichtbare Fehler) für Floatglas im Bauwesen festgelegt.

Gemäß einer ganz besonders bevorzugten Ausführungsvariante kann vorgesehen sein, dass die Glasoberfläche auf der Luftseite des Float-(Flach-)Glases mit dem Silber oder mit dem Silbersalz oder mit den Silber-Ionen in Berührung gebracht wird. In diesem Fall wird die Glasoberfläche durch die Laserbehandlung optisch nicht beeinträchtigt, d.h. die behandelte Glasoberfläche mit biozider Wirkung ist für das menschliche Auge nicht erkennbar. Das unter Anwendung des erfindungsgemäßen Verfahrens behandelte Floatglas weist auf seiner Luftseite keine verfahrensbedingte Verfärbung auf. Würde man den Prozeß auf der Badseite (zinnreiche Seite) des Float-glases ausführen, würde sich das Glas leicht braun einfärben. Auf der Luftseite des Floatglases kann diese Färbung vermieden werden.

Die Erhitzung bzw. Behandlung der Glasoberfläche mittels des Laserstrahls des Lasers kann flächig oder punktförmig und/oder nur an einer Stelle oder punktuell, also an verschiedenen Stellen, durchgeführt werden. Die punktförmige und/oder punktuelle Erhitzung bzw. Behandlung ist die wirtschaftlichste Ausführungsform. Gemäß einer Ausgestaltung des Verfahrens kann vorgesehen sein, dass die Erhitzung bzw. Behandlung mittels des Laserstrahls des Lasers nur lokal erfolgt. Es kann vorgesehen sein, dass die Erhitzung bzw. Behandlung mittels des Laserstrahls des Lasers nicht zwingend die gesamte Glasoberfläche umfasst. Es kann vorgesehen sein, dass nur ein Teil der Glasoberfläche mittels des Laserstrahls des Lasers erhitzt bzw. behandelt wird. Gemäß einer vorteilhaften Ausgestaltung des Verfahrens kann vorgesehen sein, dass die Glasoberfläche mittels des wenigstens einen Laserstrahls des Lasers derart erhitzt wird, dass im Bereich der Glasoberfläche eine flächige oder punktförmige und/oder eine punktuelle biozide Struktur erhalten wird bzw. entsteht.

Gemäß einer Ausführungsvariante kann vorgesehen sein, dass nach der Laserbehandlung auf der Glasoberfläche verbliebenes Transfermaterial durch Abwischen von der Glasoberfläche entfernt wird (Trocknen durch Abwischen). Durch einfaches Abwischen kann also eine trockene Glasoberfläche erhalten werden.

Gemäß einer Ausführungsvariante kann vorgesehen sein, dass ein Laserdruckkopf verwendet wird, mittels dessen eine lokale Glasoberfläche oder mehrere lokale Glasoberflächen des Kalk-Natronsilicatglases, beispielsweise eine Fläche oder jeweils eine Fläche von 100mm x 100mm, mittels des wenigstens einen Laserstrahls des Lasers oder mittels mehrerer Laserstrahlen eines oder mehrerer Laser erhitzt wird bzw. werden. Um größere Glasoberflächen zu bearbeiten, können mehrere Einzelflächen nacheinander, überlappend oder nicht überlappend, mittels des wenigstens einen Laserstrahls des Lasers oder mittels mehrerer Laserstrahlen eines oder mehrerer Laser behandelt bzw. erhitzt werden.

Gemäß einer bevorzugten Ausführungsvariante kann vorgesehen sein, dass der die Schicht aus Silber aufweisende Transferträger mit seiner Schutzschicht mit Hilfe eines, vorzugsweise aus Glas bestehenden, insbesondere als Andrückplatte ausgebildeten, Andrückkörpers gegen die Glasoberfläche gedrückt wird.

Gemäß einer vorteilhaften Ausgestaltung kann vorgesehen sein, dass die Glasoberfläche eine flächige oder punktförmige und/oder eine punktuelle biozide Struktur umfasst.

Weitere Vorteile, Merkmale und Gesichtspunkte der Erfindung lassen sich dem nachfolgenden Beschreibungsteil entnehmen, in dem ein bevorzugtes Ausführungsbeispiele der Erfindung beschrieben ist.

### Ausführungsbeispiel

Bei diesem Experiment wurde mit Hilfe eines als Silber-Transferband ausgebildeten Transferträgers und eines Faserlasers eine biozide Glasoberfläche eines Kalk-Natronsilikatglases hergestellt.

Als Glasart diente Floatglas in Form von handelsüblichen Objektträgern (Abmaße: 76 x 26 x 1 mm). Das Floatglas bzw. der Objektträger wies eine Badseite und eine Luftseite auf. Durch das auf der (Zinn-)Badseite des Glases des Objektträgers im Herstellungsprozess eindiffundierte Zinn ist diese Glasseite für den hier gewünschten lonenaustausch ungeeignet. Das Zinn würde als Reduktionsmittel wirken und dafür sorgen, dass die einzutreibenden Silberionen sich wieder zu atomaren Silber bzw. zu Silbernanopartikeln reduzieren. Diese würden das Glas einfärben. Deshalb wurde zunächst unter UV-Licht die Luftseite identifiziert, die dann für alle Experimente als Prozessseite definiert wurde.

Das Silber-Transferband umfasste als Trägerschicht ein Kunststoffband. Das Kunststoffband wurde bzw. war auf einer Seite mit einer Haftvermittlerschicht beschichtet, die mit nur hauchdünnen Lagen aus gesputtertem Silber beschichtet wurde bzw. war.

Das Silber lag dann dort atomar vor. Die Silberschicht wurde bzw. war mit einer als Lackschicht ausgebildeten Schutzschicht beschichtet. Die Silberschicht und die Schutzschicht bildeten eine Beschichtung der Trägerschicht.

Das Silber-Transferband wies also mehrere Schichten auf, und zwar die aus dem Kunststoff-Band gebildete Trägerschicht, die Silberschicht, die zwischen der Trägerschicht und der Silberschicht ausgebildete Haftvermittlerschicht zur Vermittlung einer Haftung des Silbers an dem Kunststoff-Band, und die unmittelbar auf der Silberschicht angeordnete bzw. applizierte, die Silberschicht abdeckende Lackschicht zum Schutz der Silberschicht.

Der Glas-Objektträger wurde auf der Luftseite, die vorliegend die obere Seite bildete, mit dem Silber-Transferband derart belegt, dass die Schutzschicht, die vorliegend die Vorderseite des Transferträgers bildete, die Glasoberfläche unmittelbar berührte.

Um eine besonders gute Anlage des Silber-Transferbandes über seine Schutzschicht auf dem Glas-Objektträger zu erreichen, wurde das Silber-Transferband mit seiner dem Glas-Objektträger zugewandten Schutzschicht mit Hilfe einer weiteren Glasplatte an die Glasoberfläche auf der Luftseite des aus Float-Gas bestehenden Glas-Objekträgers angedrückt. Diese weitere Glasplatte kann auch mit Andrück-Glasplatte bezeichnet werden.

Als Energielieferant für den darauf folgenden lonenaustausch wurde ein Nd:YAG-Faserlaser verwendet. Dieser Laser emittierte bei einer Haupt-Wellenlänge von λ = 1064 nm. Bei dieser Wellenlänge wird der Laserstrahl dieses Lasers in Glas nur vergleichsweise schlecht absorbiert.

Ausgehend von dem mit seiner Schutzschicht (Vorderseite) unmittelbar an der Glasoberfläche anliegenden Transferträger (Silber-Transferband), wurde die auf den Transferträger angedrückte Andrück-Glasplatte auf derjenigen Glasplatten-Seite, die von dem Transferträger in eine entgegengesetzte Richtung weg wies, mit von dem Laser emittierten Laserstrahlen bestrahlt. Dadurch wurde auch der unter der Andrück-Glasplatte liegende Transferträger mit den von dem Laser emittierten Laserstrahlen bestrahlt.

Somit war es möglich, dass die Laserstrahlen dieses Lasers durch die obere Andrück-Glasplatte hindurch bis in den darunter befindlichen Transferträger (Silber-Transferband) durchdringen konnten.

Entgegen den Erwartungen hat es sich überraschenderweise gezeigt, dass es bei Laserstrahlen mit einer Haupt-Wellenlänge von 1064 nm zu keiner nahezu vollständigen Reflexion der Laserstrahlen an dem Silber bzw. an der Silberschicht des Transferträgers (Silber-Transferband) kam, sondern dass es im Gegenteil sogar möglich war, genügend Energie in das Silber bzw. in die Silberschicht der Beschichtung einzukoppeln, so dass es zu einem - für das Erreichen einer bioziden Wirkung ausreichenden - lonenaustausch von Natrium-Ionen aus dem Kalk-Natronsilicatglas mit Silber-Ionen aus dem Silber bzw. aus der Silberschicht des Transferträgers und zur Einlagerung von Silber-Ionen der Silber-Ionen im Bereich der Glasoberfläche des Kalk-Natronsilicatglases kam.

Da das Silber in dem Silber-Transferband mittels des Lackes bzw. mittels der Lackschicht fixiert ist, kam es beim Kontakt des Transferträgers mit der Float-Glasoberfläche des Glas-Objektträgers zu keiner Verunreinigung der Float-Glasoberfläche mit Silber. Erst nach dem Laserprozess klebte das Transferband nur an den prozessierten Stellen, also an den mittels des wenigstens einen Laserstrahls des wenigstens einen Lasers bestrahlten Stellen, an dem Glas-Objektträger leicht an. Hierdurch wurde dessen Glasoberfläche sehr homogen und nur in dem gewünschten Bereich beschichtet. Auch der Einsatz des Faserlasers führte zu einer weiteren Steigerung der Homogenität der Silber-Beschichtung. Durch die Verwendung des Faserlasers konnte im Vergleich zu der Verwendung eines CO₂-Lasers eine größere Homogenität der Beschichtung erreicht werden.

## Patentansprüche

1. Verfahren zur Herstellung einer biozid wirkenden Glasoberfläche eines Kalk-Natronsilicatglases, wobei eine Glasoberfläche eines Kalk-Natronsilicatglases mit Silber oder Silbersalz oder Silber-Ionen unmittelbar oder mittelbar in Berührung gebracht wird und direkt oder indirekt mittels wenigstens eines Laserstrahls eines Lasers derart erhitzt wird, dass es zu einem lonenaustausch von Natrium-Ionen aus dem Kalk-Natronsilicatglas mit Silber-Ionen der Silber-Ionen oder mit Silber-Ionen aus dem Silber oder aus dem Silbersalz und zur Einlagerung von Silber-Ionen der Silber-Ionen im Bereich der Glasoberfläche kommt **dadurch gekennzeichnet,**
**dass** die Glasoberfläche, bevor sie mittels des wenigstens einen Laserstrahls des Lasers erhitzt wird, mit einem eine Trägerschicht, eine darauf angeordnete oder applizierte Schicht aus Silber und eine darauf angeordnete oder applizierte, die Schicht aus Silber abdeckende Lack-Schutzschicht aufweisenden Transferträger derart belegt wird, dass die Lack-Schutzschicht die Glasoberfläche unmittelbar berührt, wobei daran anschließend die Glasoberfläche mittels des wenigstens einen Laserstrahls des Lasers erhitzt wird.

2. Verfahren nach Anspruch 1, **dadurch gekennzeichnet, dass** es sich bei dem Kalk-Natronsilicatglas um Float-Glas handelt, das eine Badseite und eine Luftseite aufweist, wobei die Glasoberfläche auf der Luftseite des Float-Glases mit dem Silber oder mit dem Silbersalz oder mit den Silber-Ionen in Berührung gebracht wird.

3. Verfahren nach einem der vorstehenden Ansprüche, **dadurch gekennzeichnet, dass** die Trägerschicht mit Kunststoff gebildet ist oder aus Kunststoff besteht.

4. Verfahren nach einem der vorstehenden Ansprüche, **dadurch gekennzeichnet, dass** es sich bei der Trägerschicht um eine Folie oder um ein Band handelt.

5. Verfahren nach einem der vorstehenden Ansprüche, **dadurch gekennzeichnet, dass** die Glasoberfläche mittels des wenigstens einen Laserstrahls des Lasers derart erhitzt wird, dass im Bereich der Glasoberfläche eine flächige oder punktförmige und/oder eine punktuelle biozide Struktur erhalten wird.

6. Verfahren nach einem der vorstehenden Ansprüche, **dadurch gekennzeichnet, dass** die Glasoberfläche mittels des wenigstens einen Laserstrahls des Lasers an einzelnen, vorzugsweise punktförmigen, Stellen zeitlich nacheinander derart erhitzt wird, dass sich die einzelnen Stellen überlappen oder nicht überlappen.

7. Verfahren nach einem der vorstehenden Ansprüche, **dadurch gekennzeichnet, dass** der die Schicht aus Silber aufweisende Transferträger mittels eines Andrückkörpers mit seiner die Schicht aus Silber abdeckenden Schutzschicht gegen die Glasoberfläche gedrückt wird.

8. Verfahren nach einem der vorstehenden Ansprüche, **dadurch gekennzeichnet, dass** der Transferträger eine von der Schutzschicht weg weisende Trägerseite aufweist, und dass der wenigstens eine Laserstrahl in Richtung sowie unmittelbar oder mittelbar auf die von der Schutzschicht weg weisende Trägerseite des Transferträgers strahlt, wodurch die Glasoberfläche erhitzt wird.

## Claims

1. Method of producing a biocidally acting glass surface of a soda-lime glass, wherein a glass surface of a soda-lime glass is brought directly or indirectly into contact with silver or silver salt or silver ions and is directly or indirectly heated by means of at least one laser beam of a laser in such a way that ion exchange of sodium ions from the soda-lime glass with silver ions of the silver ions or with silver ions from the silver or from the silver salt and deposition of silver ions of the silver ions in the region of the glass surface take place, **characterised in that** the glass surface before being heated by means of the at least one laser beam of the laser is covered by a transfer carrier, which has a carrier layer, a layer of silver arranged thereon or applied thereto and a lacquer protective layer arranged thereon or applied thereto and covering the layer of silver, in such a way that the lacquer protective layer directly contacts the glass surface, wherein subsequently thereto the glass surface is heated by means of the at least one laser beam of the laser.

2. Method according to claim 1, **characterised in that** the soda-lime glass is float glass having a bath side and an air side, wherein the glass surface on the air side of the float glass is brought into contact with the silver or with the silver salt or with the silver ions.

3. Method according to any one of the preceding claims, **characterised in that** the carrier layer is formed by plastics material or consists of plastics material.

4. Method according to any one of the preceding claims, **characterised in that** the carrier layer is a film or a strip.

5. Method according to any one of the preceding claims, **characterised in that** the glass surface is heated by means of the at least one laser beam of the laser in such a way that an areal or punctiform and/or a point-specific biocidal structure is obtained in the region of the glass surface.

6. Method according to any one of the preceding claims, **characterised in that** the glass surface is so heated by means of the at least one laser beam of the laser at individual, preferably punctiform, locations in succession in time that the individual locations overlap or do not overlap.

7. Method according to any one of the preceding claims, **characterised in that** by means of a pressure body the transfer carrier having the layer of silver is pressed by its protective layer, which covers the layer of silver, against the glass surface.

8. Method according to any one of the preceding claims, **characterised in that** the transfer carrier has a carrier side facing away from the protective layer and that the at least one laser beam radiates in the direction of and directly or indirectly onto the carrier side, which faces away from the protective layer, of the transfer carrier, whereby the glass surface is heated.

## Revendications

1. Procédé de fabrication d'une surface d'un verre sodocalcique à effet biocidique, dans lequel une surface d'un verre sodocalcique est mise directement ou indirectement en contact avec de l'argent, un sel d'argent ou des ions argent, et chauffée directement ou indirectement à l'aide d'au moins un faisceau d'un laser, de façon telle qu'il se produise un échange d'ions sodium, provenant dudit verre sodocalcique, avec des ions argent dérivés desdits ions argent, ou avec des ions argent émanant de l'argent ou du sel d'argent, et l'inclusion d'ions argent dérivés desdits ions argent, dans la région de la surface du verre,
**caractérisé par le fait**
**que**, préalablement à son chauffage à l'aide du faisceau du laser à présence minimale, la surface du verre est garnie d'un substrat de transfert comprenant une couche de substrat, une couche d'argent appliquée ou déposée sur cette dernière, et une couche de laque protectrice appliquée ou déposée, qui recouvre ladite couche d'argent d'une manière telle que ladite couche de laque protectrice soit en contact direct avec ladite surface du verre, laquelle surface du verre est chauffée, dans l'enchaînement direct, à l'aide dudit faisceau du laser à présence minimale.

2. Procédé selon la revendication 1, **caractérisé par le fait que** le verre sodocalcique consiste en du verre flotté comprenant un côté bain et un côté air, la surface du verre étant mise en contact avec l'argent, le sel d'argent ou les ions argent du côté air dudit verre flotté.

3. Procédé selon l'une des revendications précédentes, **caractérisé par le fait que** la couche de substrat est formée à l'aide d'une matière plastique, ou est constituée d'une matière plastique.

4. Procédé selon l'une des revendications précédentes, **caractérisé par le fait que** la couche de substrat se présente comme un film ou comme un ruban.

5. Procédé selon l'une des revendications précédentes, **caractérisé par le fait que** la surface du verre est chauffée, à l'aide du faisceau du laser à présence minimale, de telle manière qu'une structure biocidique plane ou ponctiforme, et/ou ponctuelle, soit obtenue dans la région de ladite surface du verre.

6. Procédé selon l'une des revendications précédentes, **caractérisé par le fait que** la surface du verre est chauffée à l'aide du faisceau du laser à présence minimale, avec succession dans le temps dans des zones individuelles préférentiellement ponctiformes, de façon telle que lesdites zones individuelles se chevauchent ou ne se chevauchent pas.

7. Procédé selon l'une des revendications précédentes, **caractérisé par le fait que** le substrat de transfert muni de la couche d'argent est pressé contre la surface du verre, au moyen d'un corps de pressage, par sa couche protectrice recouvrant ladite couche d'argent.

8. Procédé selon l'une des revendications précédentes, **caractérisé par le fait que** le substrat de transfert comporte une face pointant à l'opposé de la couche protectrice ; et **par le fait que** le faisceau laser, à présence minimale, irradie directement ou indirectement en direction de ladite face du substrat de transfert qui pointe à l'opposé de la couche protectrice, provoquant ainsi un chauffage de la surface du verre.
